# EUROPÄISCHE PATENTANMELDUNG

(11) **EP 3 604 166 A2**
(43) Veröffentlichungstag der Anmeldung: **05.02.2020**
(21) Anmeldenummer: 19188799.1
(22) Anmeldetag: 29.07.2019
(51) Int. Cl.: B65D 77/20, B29C 51/34, B29L 31/00, B65B 47/10

(54) **WIEDERVERSCHLIESSBARE VERPACKUNG SOWIE TIEFZIEHVERPACKUNGSMASCHINE UND VERFAHREN**

(30) Priorität: 01.08.2018 DE 102018212836
(71) Anmelder: MULTIVAC Sepp Haggenmüller SE & Co. KG, 87787 Wolfertschwenden (DE)
(72) Erfinder: FERK, Florian, 87730 Bad Grönenbach (DE); KOTTEK, Norbert, 87730 Bad Grönenbach (DE); HULWA, Tilman, 86877 Walkertshofen (DE)
(74) Vertreter: Grünecker Patent- und Rechtsanwälte PartG mbB

(57) **Zusammenfassung**

Verpackung (1), insbesondere Tiefziehfolienverpackung, mit einer Schale (3) zum Einlegen eines Produkts (51) und einem an einer Oberseite (5) der Schale (3) umlaufenden, im Wesentlichen horizontalen Rand (7), mit dem zumindest abschnittsweise ein Klemmabschnitt (13) mittels einer Trennlinie (11) lösbar verbunden ist. Die Verpackung (1) umfasst des Weiteren eine Oberfolie (53), welche sich wenigstens abschnittsweise über die Schale (3), den Rand (7) und den Klemmabschnitt (13) erstreckt und mit einer umlaufenden ersten Siegelnaht (9) mit dem Rand (7) lösbar verbunden ist und so die Schale (3) gasdicht verschließt, und die Oberfolie (53) mit einer zweiten Siegelnaht (15) mit dem Klemmabschnitt (13) verbunden ist. An einer Seitenfläche (21) der Schale (3) ist ein Hinterzug (23) angeordnet, der einen Vorsprung (27) aufweist, wobei der Vorsprung (27) dazu geeignet ist, den Klemmabschnitt (13) zu arretieren, wenn der Klemmabschnitt (13) an der Trennlinie (11) von dem Rand (7) gelöst ist und sich zumindest abschnittsweise zwischen dem Vorsprung (27) des Hinterzugs (23) und der Seitenfläche (21) der Schale (3) befindet. Desweiteren wird eine Tiefziehverpackungsmaschine (41) mit einem verschiebbaren Wandsegment (61) und ein Verfahren zum Betrieb der Tiefziehverpackungsmaschine (41) beschrieben.

## Beschreibung

Die vorliegende Erfindung betrifft eine wiederverschließbare Verpackung sowie eine Tiefziehverpackungsmaschine zum Herstellen einer solchen Verpackung und ein Verfahren zum Betrieb der Tiefziehverpackungsmasch i ne.

Zunehmend Verwendung finden Verpackungen, die eine aus einer stabilen Unterfolie bzw. Hartfolie tiefgezogene Schale umfassen, welche mit einer Oberfolie verschlossen ist. Besonders für Lebensmittelprodukte sind diese Verpackungen nach dem ersten Öffnen wiederverschließbar, was beispielsweise durch eine ihre Wirkung zumindest teilweise beibehaltende Klebenaht erreicht wird. Eine solche Verpackung ist beispielsweise aus der DE 10 2015 205 221 A1 bekannt. Es hat sich jedoch herausgestellt, dass die Klebenaht oftmals, insbesondere nach mehrmaligem Öffnen und Schließen, keine ausreichende Adhäsionskraft mehr zur Verfügung stellt, um einen Luftaustausch des Innenraums der Verpackung mit der Umgebung zu verhindern.

Die tiefgezogenen Schalen der Verpackungen sind üblicherweise in einer im Querschnitt betrachtet rechteckigen Form, in Form eines Parallelogramms oder in Trapezform, bei welcher sich der horizontale Querschnitt der Schale von oben nach unten verjüngt, ausgebildet. In allen diesen Fällen ist ein Entnehmen der Schale nach oben, bzw. schräg nach oben aus einer Formmulde nach dem Tiefziehen der Unterfolie problemlos möglich, wie beispielsweise in der US 5,014,500 gezeigt.

Es kann jedoch auch mitunter nötig sein, von diesen Standardformen abzuweichen und Schalen zu fertigen, welche an den Seitenflächen sich nach unten hin verbeiternde Abschnitte oder Ausbuchtungen, sogenannte Hinterzüge, oder auch Einstülpungen in Richtung des Schaleninneren aufweisen. Damit kann die Schale nach dem Tiefziehen nicht mehr ohne Weiteres aus der Formmulde entnommen werden, da diese Konturen der Schale mit den entsprechenden Teilen der Formmulde kollidieren. Abhilfe schafft hier das Wegschieben oder Wegklappen von Wandsegmenten der Formmulde, wie beispielsweise in der EP 2570351 B1 beschrieben.

Aufgabe der vorliegenden Erfindung ist es, eine Verpackung mit verbessertem Wiederverschließmechanismus und eine Tiefziehverpackungsmaschine zur Herstellung einer solchen Verpackung bereit zu stellen.

Die Aufgabe wird erfindungsgemäß gelöst durch eine Verpackung gemäß Anspruch 1 sowie eine Tiefziehverpackungsmaschine gemäß Anspruch 8 und ein Verfahren zum Betrieb einer Tiefziehverpackungsmaschine gemäß Anspruch 15. Vorteilhafte Weiterbildungen sind in den Unteransprüchen angegeben.

Eine erfindungsgemäße Verpackung, insbesondere Tiefziehfolienverpackung, umfasst eine Schale zum Einlegen eines Produkts mit einem an einer Oberseite der Schale umlaufenden, im Wesentlichen horizontalen Rand, mit dem zumindest abschnittsweise ein Klemmabschnitt mittels einer Trennlinie lösbar verbunden ist. Die Trennlinie kann eine Schneidlinie oder Perforation sein und derart ausgeführt sein, sich zu öffnen und damit den Klemmabschnitt vom horizontalen Rand zu trennen, wenn der Klemmabschnitt um die Trennlinie aus der Horizontalen abgewinkelt bzw. geknickt wird. Die Verpackung umfasst des Weiteren eine Oberfolie, welche sich wenigstens abschnittsweise über die Schale, den Rand und den Klemmabschnitt erstreckt und mit einer umlaufenden ersten Siegelnaht mit dem Rand lösbar verbunden ist und so die Schale gasdicht verschließt. Zudem ist die Oberfolie mit einer zweiten Siegelnaht mit dem Klemmabschnitt verbunden. An einer Seitenfläche der Schale ist ein Hinterzug angeordnet, der einen Vorsprung aufweist, wobei der Vorsprung dazu geeignet ist, den Klemmabschnitt zu arretieren, wenn der Klemmabschnitt an der Trennlinie von dem Rand gelöst ist und sich zumindest abschnittsweise zwischen dem Vorsprung des Hinterzugs und der Seitenfläche der Schale befindet.

So kann die Verpackung geöffnet werden, indem die Oberfolie von der Schale abgezogen wird. Dabei bleibt der Klemmabschnitt, welcher durch eine Knickbewegung von dem horizontalen Rand der Schale getrennt wurde, mit der Oberfolie verbunden. Ebenso bleibt ein Abschnitt der Oberfolie, zweckmäßigerweise an einer dem Klemmabschnitt gegenüberliegenden Seite der Schale, mit dieser verbunden, indem die Oberfolie nicht vollständig abgezogen wird. Wird nur ein Teil des Produkts aus der Schale entnommen, so kann nun die Verpackung wieder verschlossen werden, indem die Oberfolie wieder auf die Schale aufgelegt wird und der weiterhin mit der Oberfolie verbundene Klemmabschnitt nach unten geschwenkt und zwischen die zum Klemmabschnitt benachbarte Seitenfläche und den Vorsprung des an dieser Seitenfläche ausgebildeten Hinterzugs geklemmt wird. Dabei spannt sich die Oberfolie und liegt im Wesentlichen plan auf dem oberen horizontalen Rand der Schale auf und verschließt diese damit. Die Verpackung kann weiterhin mehrmals geöffnet und wieder geschlossen werden, wobei das in der Verpackung verbleibende Produkt im Wesentlichen luftdicht gelagert wird.

Zweckmäßig ist der Abstand eines Scheitels des Vorsprungs zu der Trennlinie geringer als eine Breite des Klemmabschnitts. Somit ist sichergestellt, dass sich der Klemmabschnitt nicht selbständig aus der Arretierung lösen kann. Zum Einklemmen des Klemmabschnitts und zum Herausnehmen aus der Arretierung hinter dem Vorsprung werden Abschnitte der Verpackungsschale mit einem gewissen Kraftaufwand elastisch gebogen, so zum Beispiel der obere Rand der Schale benachbart zum Klemmabschnitt oder die Seitenfläche, an welcher der Hinterzug ausgebildet ist.

In einer üblichen Variante weist der Klemmabschnitt eine derart gestaltete Kontur auf, um eine ausreichende Festigkeit des Klemmabschnitts zu gewährleisten, so dass dieser arretiert bleibt, wenn eine Zugkraft von der Oberfolie auf diesen ausgeübt wird. Die Kontur, welche beispielsweise eine abschnittsweise oder durchgängig über die Länge des Klemmabschnitts ausgebildete Einkerbung sein kann, kann bereits beim Tiefziehen ausgebildet werden. Wie bekannt ist, weisen strukturierte Flächen eine höhere Biege- und Verwindungsfestigkeit als vollständig ebene Flächen auf. Dementsprechend wird ein ungewolltes Verbiegen des Klemmabschnitts und ein Lösen aus der Arretierung verhindert.

In einer vorteilhaften Variante weist der Klemmabschnitt eine dritte Siegelnaht auf. Somit ist der Klemmabschnitt mit insgesamt zwei Siegelnähten und damit besonders stabil mit der Oberfolie verbunden. Insbesondere wenn der Klemmabschnitt eine Kontur zur Verstärkung aufweist, wie im vorangegangenen Abschnitt beschrieben, kann die Kontur mittig angeordnet und die Oberfolie beidseitig der Kontur mit dem Klemmabschnitt verbunden sein.

In einer weiteren Variante entspricht der Hinterzug im seitlichen Profil betrachtet im Wesentlichen einem Viertel eines Ovals. Der Hinterzug weist also, insbesondere an seinem äußeren Verlauf, keine harten Ecken oder Kanten auf, was einerseits die Haptik und Optik der Verpackung verbessert, besonders da damit auch ein Eindrücken oder Verformen solcher Ecken und Kanten nicht stattfindet, und andererseits auch die beim Arretieren des Klemmabschnitts auftretenden Kräfte vorteilhaft in die Seitenfläche der Schale abgeleitet werden.

Bevorzugt ist die zweite und/oder dritte Siegelnaht nicht-lösbar ausgebildet. Die Siegelnähte, welche die Oberfolie mit dem Klemmabschnitt verbinden, können damit nicht versehentlich von dem Konsumenten aufgezogen werden.

Vorzugsweise ist die erste Siegelnaht als wiederverschließbare Klebeverbindung ausgebildet. So kann nach dem erstmaligen Öffnen der Verpackung die Oberfolie zusätzlich wieder angedrückt werden, um die Verpackung besonders luftdicht zu verschließen. Zusammen mit der Niederhaltung der Folie durch das Einspannen des Klemmabschnitts hinter den Vorsprung des Hinterzugs wird ein besonders zuverlässiger luftdichter Verschluss der Verpackung erreicht.

Eine erfindungsgemäße Tiefziehverpackungsmaschine zum Herstellen einer Verpackung, insbesondere einer Verpackung entsprechend der vorangegangenen Beschreibung, umfasst eine Formstation zum Tiefziehen einer Unterfolie, wobei die Formstation wiederum ein Formwerkzeugunterteil mit einer Formmulde umfasst und die Formmulde ein Wandsegment aufweist, welches ausgebildet ist, eine Seitenfläche der Verpackung mit einem Hinterzug zu formen. Das Wandsegment umfasst ein Oberteil und ein Unterteil und ist von einer ersten Position, bei welcher sich die Formmulde in einer Tiefziehkonfiguration befindet, in eine zweite Position, bei welcher sich die Formmulde in einer Entnahmekonfiguration befindet, verschiebbar gelagert. Die Tiefziehkonfiguration ist zum Tiefziehen der Unterfolie geeignet, und die Entnahmekonfiguration ist zum Absenken des Formwerkzeugunterteils und damit zur Entnahme der Verpackung, insbesondere kollisionsfrei, geeignet. Dabei ist das Oberteil derart an dem Unterteil angelenkt, um mit diesem verschoben zu werden und dabei eine Drehbewegung relativ zum Unterteil auszuführen. In der Tiefziehkonfiguration ist das Wandsegment, inklusive Ober- und Unterteil, so angeordnet, dass die Formstation geschlossen werden kann, indem ein Formwerkzeugoberteil mit dem Formwerkzeugunterteil in Anlage gebracht wird. Die in die Formstation eingebrachte Unterfolie kann dann durch die Ausbildung einer Druckdifferenz zwischen ihrer Ober- und Unterseite und gegebenenfalls durch Erwärmen in die Formmulde tiefgezogen werden, d.h. sie passt sich den Flächen und Konturen der Formmulde an und es entsteht so eine entsprechend geformte Schale.

Zum Entnehmen der geformten Schale wird die Formstation geöffnet und beispielsweise das Formwerkzeugunterteil nach unten gefahren, um die Schale zum seitlichen Abtransport freizugeben. Für eine wie oben beschriebene Schale ist eine derartige Relativbewegung von Schale und Formmulde aber nicht ohne Weiteres möglich, da der an einer Seitenfläche geformte Hinterzug mit dem Wandsegment kollidieren würde. Dies wird durch ein seitliches Verschieben des Wandsegments nach außen von der Formmulde weg behoben. Da eine Verpackung der eingangs beschriebenen Art einen Hinterzug mit einem an diesem oben angeordneten Vorsprung aufweist, ist jedoch ein bloßes seitliches Verschieben ebenfalls nicht möglich, da der Vorsprung mit dem Wandsegment kollidieren würde. Dies wird wiederum gelöst, in dem das Wandsegment in ein Oberteil und ein Unterteil geteilt wird und beim Verschieben des Wandsegments das Oberteil eine zusätzliche Drehbewegung um den Vorsprung des Hinterzugs ausführt. Somit wird die tiefgezogene Schale freigegeben und kann in einem automatisierten Vorgang in einer vertikalen Bewegung aus der Formmulde entnommen werden.

In die Formstation kann des Weiteren ein Schneidwerkzeug integriert sein, um die Trennlinie zwischen Klemmabschnitt und oberen Rand der Schale als Anschnittlinie oder Perforation zu schneiden. Ein solches Schneidwerkzeug kann jedoch auch separat und zweckmäßig als stromabwärts nächste Station der Tiefziehverpackungsmaschine vorhanden sein. Üblicherweise schließt sich eine Station zum Einlegen der Produkte in die Schale, eine Siegelstation zum Verschließen der Schale mit einer Oberfolie sowie eine Schneidstation zum Schneiden und Vereinzeln der versiegelten Verpackungen an.

Typischerweise ist das Oberteil derart an dem Unterteil angelenkt, dass das Oberteil beim Ausführen der Drehbewegung während des Verschiebens des Wandsegments stets unterhalb seiner obersten vertikalen Erstreckung bleibt, die es in der Position aufweist, wenn die Formmulde in der Tiefziehkonfiguration ist. Bei bisherigen vergleichbaren Konstruktionen mit bewegbaren Wandsegmenten einer Formmulde, wie oben im Stand der Technik beschrieben, besteht die Problematik, dass die Bewegungen des Wandsegments durch andere Abschnitte der Formmulde oder die tiefgezogene Unterfolie behindert werden und beispielsweise ein Wandsegment nur mit gleichzeitiger Vertikalbewegung der tiefgezogenen Schale verschoben oder gedreht werden kann. Mit der vorliegenden Ausführungsform, welche weiter unten anhand der Abbildungen näher erläutert wird, stößt das Oberteil beim Ausführen der Drehbewegung nicht an einen oberen Rand der Schale. Es kann somit auch selbst als Auflagefläche zum Formen des oberen Schalenrandes dienen. Zudem kann das Verschieben des Wandsegments und Freigeben der Verpackungsschale als vom eigentlichen Entnehmen der Verpackungsschalen unabhängiger Vorgang im Fertigungsprozess geplant werden.

In einer gängigen Variante ist das Oberteil an einer an dem Unterteil angeordneten Drehachse angelenkt. Dies ist eine besonders einfache und zweckmäßige Konstruktion, da das Oberteil keine weiteren Führungen oder Verbindungen an oder mit dem Formwerkzeugunterteil benötigt. Die Kraftübertragung zur Veranlassung der Drehbewegung erfolgt dementsprechend nur über das Unterteil des verschiebbaren Wandsegments.

Üblicherweise liegt das Oberteil in der Tiefziehkonfiguration der Formmulde an dem Unterteil formschlüssig an. Dies bedeutet einerseits, dass die Ränder des Oberteils so mit dem Unterteil und den anliegenden Abschnitten der Formmulde abschließen, dass keinerlei unerwünschte Vorsprünge oder Vertiefungen während des Tiefziehens vorhanden sind, um eine einwandfreie Schalenform herzustellen. Zusätzlich kann das Oberteil jedoch so an dem Unterteil anliegen, dass ein beim Tiefziehen auftretender Formdruck in das Unterteil abgeleitet wird und somit ein ungewolltes Drehen um die Drehachse verhindert wird. Dazu ist eine Auflagefläche des Oberteils an einem zur Drehachse entfernten Ende ausgebildet.

In einer weiteren gängigen Variante ist das Oberteil mit einem Rückstellmechanismus, insbesondere einer Feder, an dem Unterteil angelenkt, um beim Verschieben des Wandsegments automatisch in eine Endlage zurückzukehren. Eine solche Konstruktion ist besonders einfach und damit günstig herzustellen.

Vorzugsweise weist das Formwerkzeugunterteil Düsenbohrungen auf, um zur Kühlung des Wandsegments Luft auf dieses zu blasen, wobei die Düsenbohrungen verschlossen sind, wenn sich die Formmulde in der Tiefziehkonfiguration befindet, und aktiv sind, wenn sich die Formmulde in der Entnahmekonfiguration befindet. Dabei kann das Öffnen und Schließen der Düsenbohrungen durch einen eigenständigen, mit der Bewegung des Wandsegments jedoch synchronisierten Mechanismus erfolgen. Alternativ kann auch ein Abschnitt des Wandsegments selbst je nach Position die Düsenbohrungen luftdicht abdecken oder freigeben. Somit kann auch im letzteren Fall eine Kühlung des Wandsegments im geöffneten Zustand stattfinden, wenn ein Abströmen der Luft möglich ist.

In einer weiteren vorteilhaften Variante weist die Tiefziehverpackungsmaschine einen linearen Antrieb auf, welcher mit einem Schieber in Eingriff ist, um diesen zu bewegen, und wobei der Schieber eine kurvenförmige Steuernut aufweist. Das verschiebbare Wandsegment umfasst dabei einen Zapfen, der mit der Steuernut in Eingriff ist, so dass das Wandsegment beim Betätigen des Antriebs linear verschoben wird. Wie weiter unten anhand der Abbildungen näher erläutert, ist dies eine besonders platzsparende Anordnung, welche eine Linearbewegung in eine dazu senkrechte Linearbewegung übersetzt. Zudem kann der Schieber mit mehreren Steuernuten ausgebildet werden, um so mehrere nebeneinander liegende Wandsegmente gleichzeitig zu bewegen. Außerdem ist der Schieber so gelagert und die Steuernut so geformt, dass das Wandsegment nicht durch einen Formdruck aufgedrückt werden kann, da nur eine seitliche Bewegung des Schiebers, parallel zur Formmulde, die Verschiebung des Wandsegments verursachen kann.

Im Folgenden werden Ausführungsbeispiele der Erfindung anhand der Figuren näher beschrieben. Dabei zeigen
- Figur 1:: eine perspektivische Draufsicht auf eine Verpackung,
- Figur 2:: eine perspektivische Ansicht von schräg unten auf eine Verpackung,
- Figur 3:: eine perspektivische Ansicht von schräg unten auf eine Verpackung mit umgeklapptem Klemmabschnitt,
- Figur 4:: eine seitliche Schnittansicht einer Verpackung im Bereich eines Hinterzugs,
- Figur 5:: eine seitliche Schnittansicht einer Verpackung im Bereich eines Hinterzugs mit umgeklapptem Klemmabschnitt,
- Figur 6:: eine schematische Ansicht einer Tiefziehverpackungsmaschine,
- Figur 7:: eine perspektivische Ansicht eines Formwerkzeugunterteils mit zwei Formmulden in Tiefziehkonfiguration,
- Figur 8:: eine perspektivische Ansicht einer Formmulde in Entnahmekonfiguration,
- Figur 9:: eine seitliche Schnittansicht einer Formmulde in Tiefziehkonfiguration,
- Figur 10:: eine seitliche Schnittansicht einer Formmulde in Entnahmekonfiguration,
- Figur 11:: eine perspektivische Ansicht von vier Wandsegmenten mit Antriebskomponenten in Tiefziehkonfiguration,
- Figur 12:: eine perspektivische Ansicht von vier Wandsegmenten mit Antriebskomponenten in Entnahmekonfiguration,
- Figur 13:: eine Schnittansicht eines Formwerkzeugunterteils in Tiefziehkonfiguration,
- Figur 14:: eine Schnittansicht eines Formwerkzeugunterteils in Entnahmekonfiguration,
- Figur 15:: eine perspektivische Ansicht eines gewinkelten Schnitts des Formwerkzeugunterteils in Tiefziehkonfiguration,
- Figur 16:: eine perspektivische Ansicht eines gewinkelten Schnitts des Formwerkzeugunterteils in Entnahmekonfiguration.

Einander entsprechende Komponenten sind in den Figuren jeweils mit gleichen Bezugszeichen versehen.

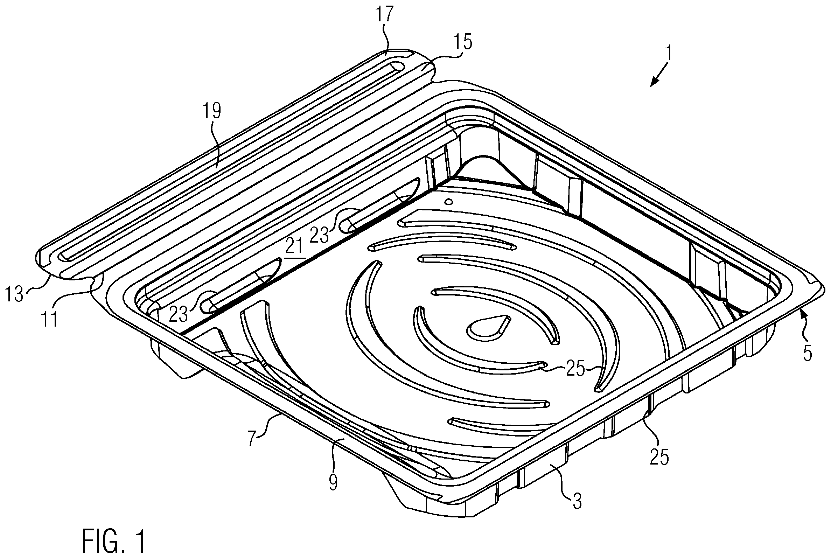

Figur 1 zeigt eine tiefgezogene Verpackung 1, umfassend eine Schale 3 und eine Oberfolie, die hier der Übersichtlichkeit halber nicht dargestellt ist. An einer Oberseite 5 der Schale 3 ist ein umlaufender, horizontaler Rand 7 ausgebildet, auf dem eine erste Siegelnaht 9 die Schale 3 mit der Oberfolie verbindet. An dem Rand 7 ist über eine Trennlinie 11, welche ein Vorschnitt oder eine Perforation sein kann, ein Klemmabschnitt 13 angeordnet. Über eine zweite und dritte Siegelnaht 15, 17 ist die einstückige Oberfolie mit dem Klemmabschnitt 13 verbunden. Zur Verbesserung der Stabilität und Handhabung weist der Klemmabschnitt 13 eine mittig angeordnete Kontur 19 auf. Üblicherweise wird die versiegelte Verpackung 1 nach dem Siegelprozess vereinzelt und geschnitten, so dass die Oberfolie mit der Schale 3, insbesondere mit dem Rand 7 und dem Klemmabschnitt 13, deckungsgleich in ihrer horizontalen Form abschließt. An einer Seitenfläche 21 sind zwei Hinterzüge 23 ausgeformt. Zudem weist die Schale 3 weitere Strukturen 25 auf, um die Stabilität und Handhabung der Verpackung 1 zu verbessern.

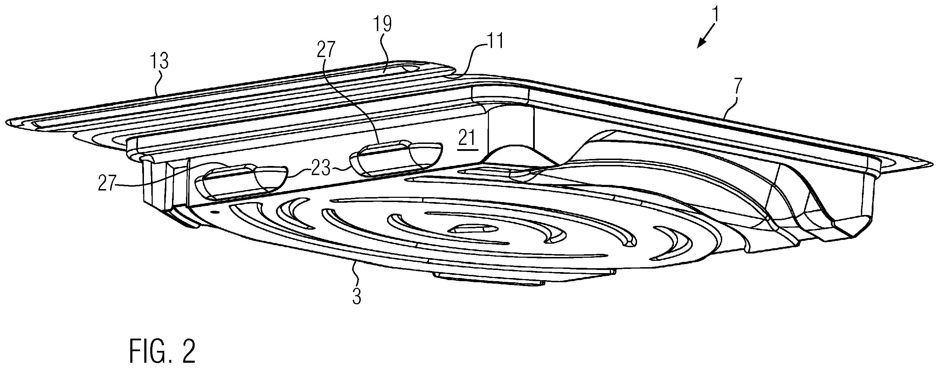

Figur 2 zeigt die Verpackung 1 in einer Ansicht von schräg unten. An der dem Klemmabschnitt 13 benachbarten Seitenfläche 21 sind die zwei Hinterzüge 23 zu erkennen, welche im Querschnitt im Wesentlichen einem Viertel eines Ovals entsprechen. Die Hinterzüge 23 weisen jeweils einen Vorsprung 27 auf, hinter den der Klemmabschnitt 13 beim Wiederverschließen der Verpackung 1 geklemmt wird. Neben der hier dargestellten Ausführungsform der Verpackung 1 mit zwei Hinterzügen 23 ist es möglich, nur einen Hinterzug 23 oder auch mehr als zwei Hinterzüge 23 an der Seitenfläche 21 auszubilden.

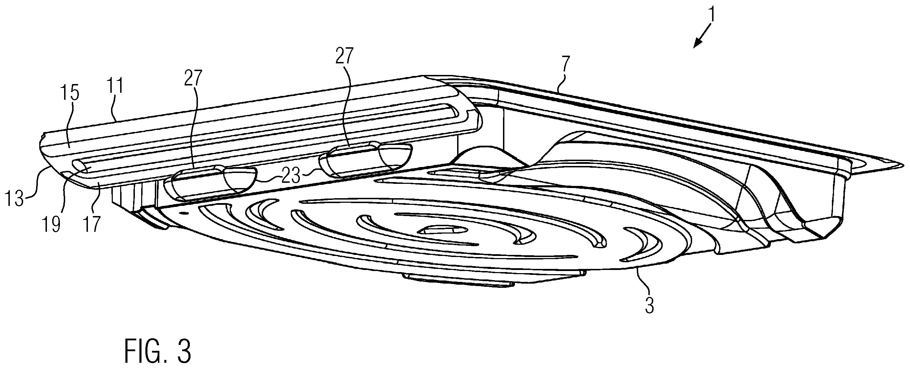

Figur 3 zeigt die Verpackung 1 aus Figur 1 und 2, bei welcher der Klemmabschnitt 13 an der Trennlinie 11 nach unten geklappt und hinter die Vorsprünge 27 geschoben wurde. Beim erstmaligen Öffnen der Verpackung 1 wird zweckmäßigerweise der Klemmabschnitt 13 gefasst und die mit ihm verbundene Oberfolie zumindest teilweise von der Schale 3 abgezogen, wobei die erste Siegelnaht 9 gelöst wird, jedoch zumindest an der dem Klemmabschnitt 13 gegenüberliegenden Seite des Rands 7 weiterhin die Oberfolie und die Schale 3 über einen Teil der Siegelnaht 9 verbunden bleibt. So kann, wie gezeigt, der Klemmabschnitt 13 hinter die Vorsprünge 27 geklemmt und von diesen arretiert werden, wobei sich die Oberfolie spannt und einen nach außen gerichteten Gegenzug auf den Klemmabschnitt 13 ausübt. Das Klemmen des Klemmabschnitts 13 hinter die Vorsprünge 27 und das Herausnehmen erfolgt dabei mit einer elastischen Biegung oder Verwindung des Klemmabschnitts 13 und/oder der Hinterzüge 23 oder anderer Teile der Schale 3, wobei in der dargestellten arretierten Stellung ausreichend Stabilität vorhanden ist, um ein selbständiges Herausspringen des Klemmabschnitts 13 zu verhindern.

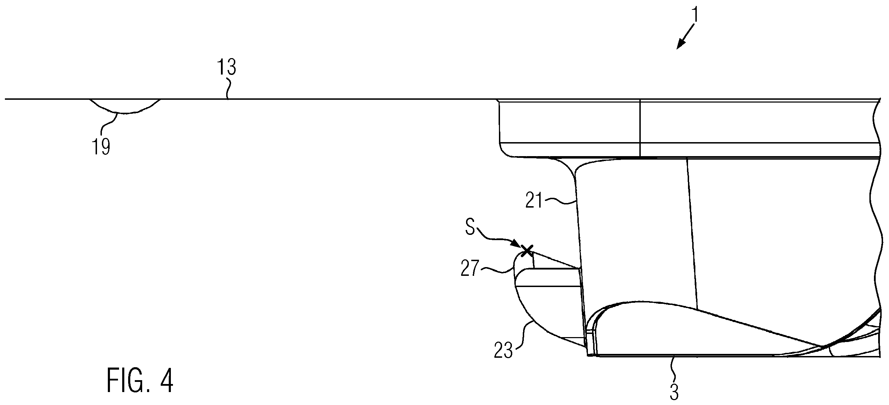

Figur 4 zeigt eine seitliche Schnittansicht einer Verpackung 1 mit Hinterzug 23 und Klemmabschnitt 13. Zu erkennen ist das Profil des Hinterzugs 23 und des Vorsprungs 27, dessen höchster Punkt der Scheitelpunkt S ist. Vom Scheitelpunkt S zur Seitenfläche 21 verläuft das Profil des Vorsprungs 27 hier geradlinig, es kann jedoch auch beispielsweise konkav geformt sein. Der Klemmabschnitt 13 weist die Kontur 19 in Form einer nach unten gerichteten Ausbuchtung auf.

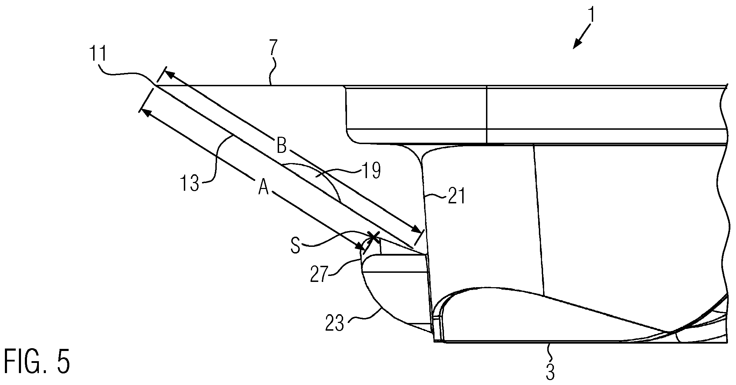

Figur 5 zeigt die seitliche Schnittansicht einer Verpackung 1 gemäß Figur 4, wobei der Klemmabschnitt 13 an der Trennlinie 11 nach unten geschwenkt und hinter dem Vorsprung 27 arretiert ist. Um ein selbständiges Lösen des Klemmabschnitts 13 aus der Arretierung zu verhindern, ist eine Breite B des Klemmabschnitts 13 größer als der direkte Abstand A des Scheitelpunkts S von der Trennlinie 11. Zum Klemmen des Klemmabschnitts 13 hinter den Vorsprung 27 sowie zum Lösen sind die verschiedenen Abschnitte der Schale 3 dazu geeignet, in geringem Ausmaß elastisch deformiert zu werden. Dazu kann der Klemmabschnitt 13 leicht gebogen werden, es kann eine nach oben gerichtete Kraft auf den oberen horizontalen Rand 7 ausgeübt werden und schließlich kann sich auch die Seitenfläche 21 in begrenztem Umfang verwinden.

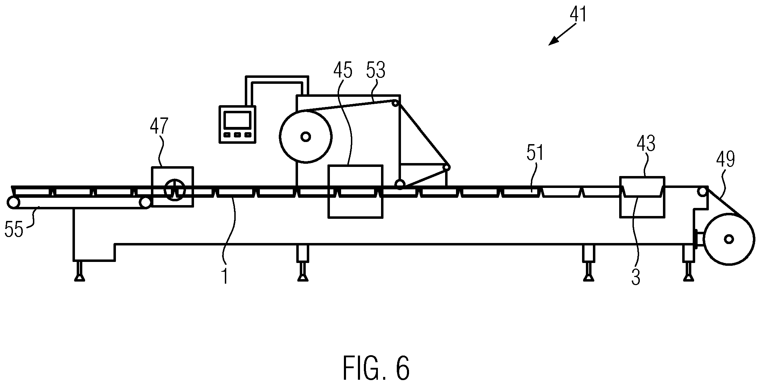

Figur 6 zeigt eine schematische Ansicht einer Tiefziehverpackungsmaschine 41 mit einer Formstation 43, einer Siegelstation 45 und einer Schneideeinrichtung 47. Eine Unterfolie 49 wird zunächst von einer Rolle abgerollt und, beispielsweise beidseitig eingespannt in Transportketten, der Formstation 43 zugeführt, wo eine Schale 3 mit Hinterzug 23 der oben beschriebenen Art tiefgezogen wird. Zum Ausbilden der Trennlinie 11 zwischen Klemmabschnitt 13 und oberem Rand 7 kann in der Formstation 43 oder auch separat ein Schneidwerkzeug vorhanden sein. Die Trennlinie 11 wird zweckmäßig im Anschluss zu dem Tiefziehen der Schale 3 geschnitten oder perforiert, da sie nur in der Unterfolie 49 vorhanden sein soll, nicht jedoch in der sie überspannenden Oberfolie 53. Anschließend wird ein Produkt 51 in die Schale 3 eingelegt und die Schale 3 in der Siegelstation 45 mit der Oberfolie 53 versiegelt. Das Tiefziehen, Befüllen und Versiegeln kann pro Arbeitsschritt jeweils für eine oder auch für mehrere Schalen 3, welche nebeneinander und/oder hintereinander angeordnet sind, erfolgen. Mittels der Schneideeinrichtung 47 werden die Verpackungen 1 dann geschnitten und vereinzelt, beispielsweise mit runden Eckschnitten des oberen Rands 7 und des Klemmabschnitts 13. Eine Abfördereinheit 55 transportiert die Verpackungen 1 aus der Tiefziehverpackungsmaschine 41.

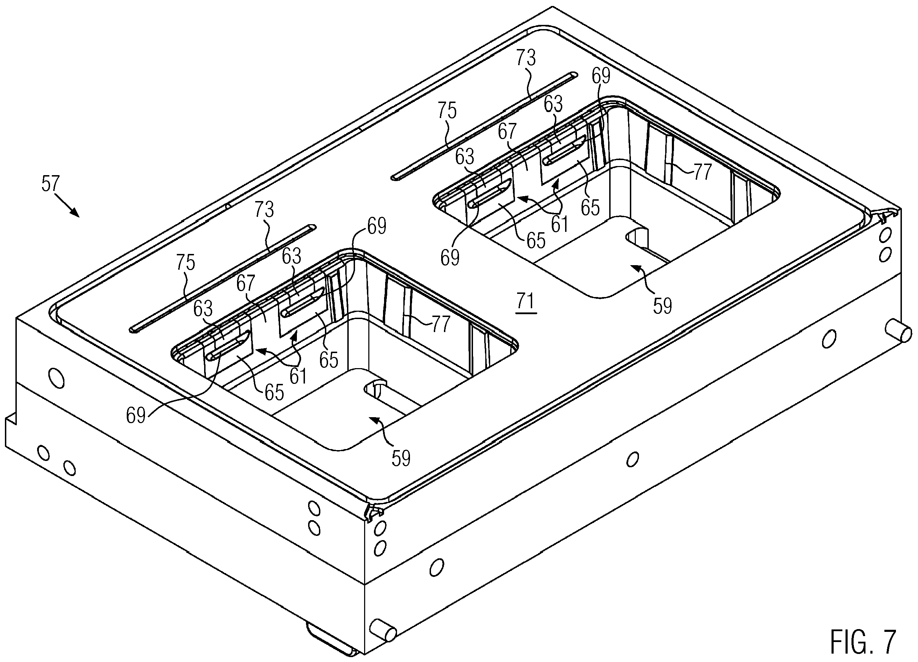

Figur 7 zeigt eine perspektivische Ansicht eines Formwerkzeugunterteils 57 mit zwei Formmulden 59 in Tiefziehkonfiguration. Jede Formmulde 59 weist zwei verschiebbare Wandsegmente 61 auf, welche ein Oberteil 63 und ein Unterteil 65 umfassen. In der gezeigten Tiefziehkonfiguration sind die Wandsegmente 61 formschlüssig und bündig mit den benachbarten inneren Seitenflächen 67 der Formmulde 59 angeordnet und weisen eine Ausnehmung 69 zum Formen des Hinterzugs 23 auf. Eine obere Auflagefläche 71 dient zur Ausbildung des oberen horizontalen Rands 7 und des Klemmabschnitts 13, wobei der Rand 7 später mittels der Schneideeinrichtung 47 auf die gewünschten Abmessungen geschnitten wird. Zur Ausbildung der Kontur 19 in dem Klemmabschnitt 13 ist eine Vertiefung 73 vorhanden, in welcher über Luftkanäle 75 der nötige Unterdruck zum Tiefziehen der Unterfolie 49 hergestellt wird. Zum Formen der in Figur 1 gezeigten stabilitätsverbessernden Strukturen 25 sind entsprechende Profile 77 in der Formmulde 59 ausgebildet, welche jedoch so gestaltet sind, dass sie beim Entnehmen der tiefgezogenen Schale 3 nicht hinderlich sind.

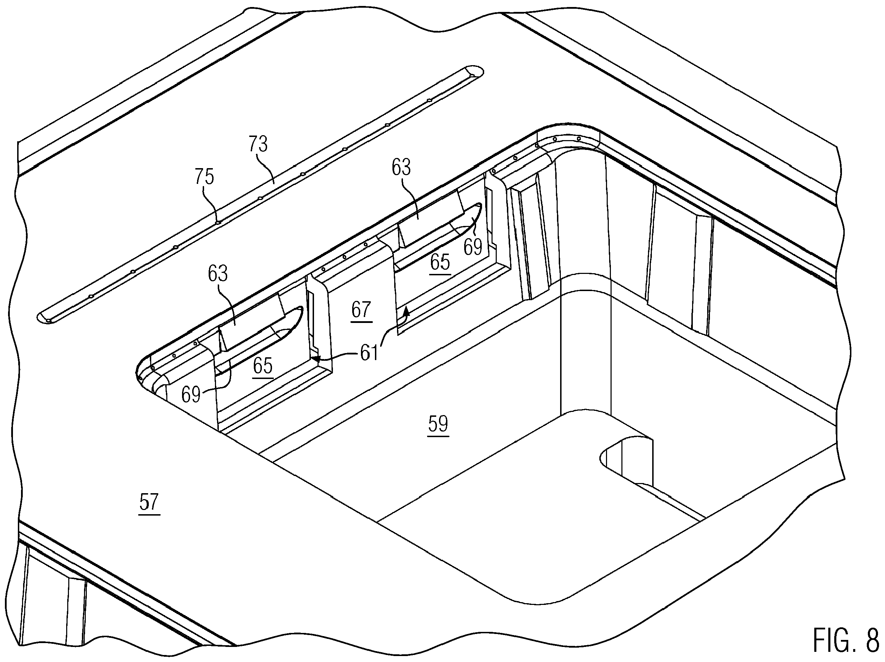

Figur 8 zeigt eine vergrößerte perspektivische Ansicht einer Formmulde 59 in Entnahmekonfiguration. Um das Formwerkzeugunterteil 57 nach unten absenken zu können, sind die Wandsegmente 61 nach außen verschoben, wodurch die Hinterzüge 23 einer tiefgezogenen Schale 3 für eine vertikale Bewegung freigegeben sind. Da an der Oberseite der Hinterzüge 23 jeweils ein Vorsprung 27 geformt ist, werden die Oberteile 63 der Wandsegmente 61 zusätzlich zu deren horizontaler Bewegung um die Vorsprünge 27 gedreht, beispielsweise um einen Winkel von ca. 30°.

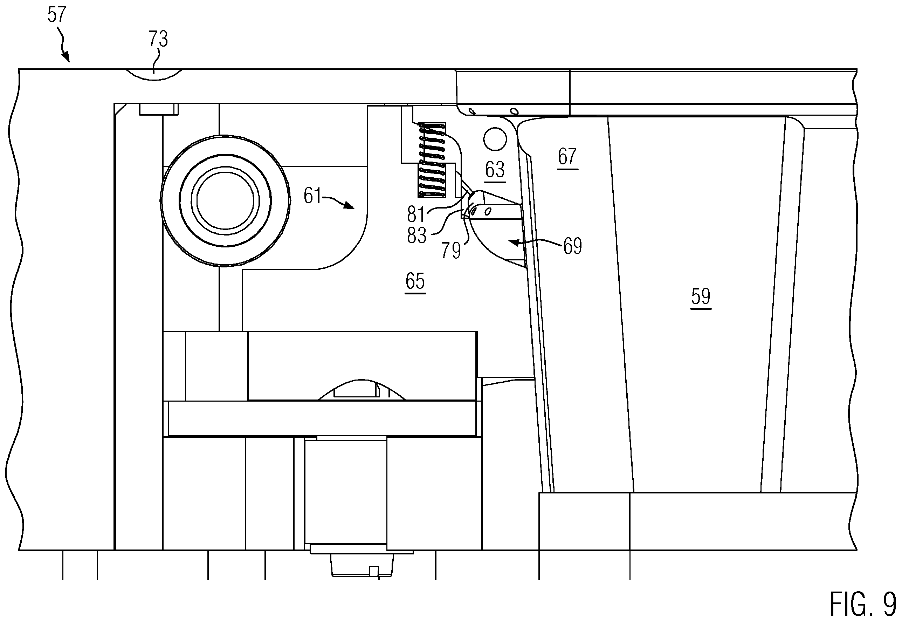

Figur 9 zeigt eine seitliche Schnittansicht einer Formmulde 59 bzw. des Formwerkzeugunterteils 57 in Tiefziehkonfiguration entsprechend Figur 7. Das Wandsegment 61 und somit dessen Oberteil 63 und Unterteil 65 schließen bündig mit den übrigen Seitenflächen 67 der Formmulde 59 ab und bilden das gewünschte Profil zum Formen des Hinterzugs 23 und des Vorsprungs 27 der Schale 3. Dabei ist als Teil der Ausnehmung 69 für den Hinterzug 23 im Oberteil 63 eine Ausnehmung 79 für den Vorsprung 27 ausgebildet. Um das Einformen der Unterfolie 49 in die Ausnehmungen 69, 79 zu gewährleisten, können ein oder mehrere Luftkanäle 81 zur Ausbildung eines Unterdrucks in dem Oberteil 63 vorhanden sein. Der Luftkanal 81 ist dazu zweckmäßig an einer am weitesten zurückgenommenen Position der Ausnehmungen 69, 79 angeordnet. Das Oberteil 63 schließt nicht nur formschlüssig mit den benachbarten Seitenflächen 67 der Formmulde 59 ab, sondern liegt auch mit einem seitlichen Abschnitt 83 an dem Unterteil 65 des Wandsegments 61 an. Dadurch kann ein Formdruck auf das stabil gelagerte Unterteil 65 abgeleitet werden.

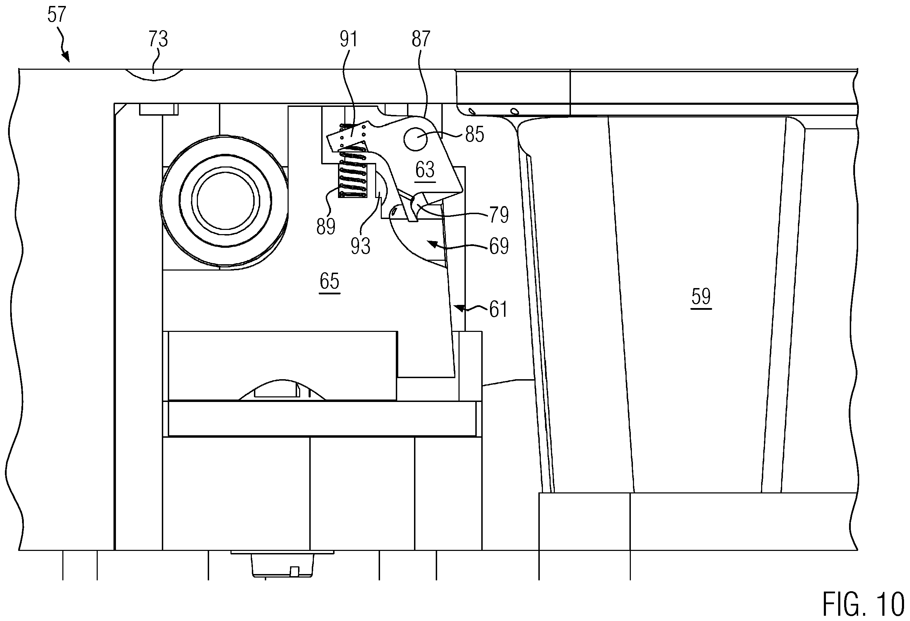

Figur 10 zeigt eine seitliche Schnittansicht einer Formmulde 59 bzw. des Formwerkzeugunterteils 57 in Entnahmekonfiguration entsprechend Figur 8. Das Wandsegment 61 ist nach außen, in dieser Darstellung nach links, verschoben, um die Schale 3 zum vertikalen Entnehmen freizugeben. Das Wandsegment 61 ist also in eine Position bewegt, in welcher der Hinterzug 23 nicht mit dem Wandsegment 61, insbesondere dem Oberteil 63, kollidiert, wenn sich das Formwerkzeugunterteil 57 nach unten absenkt. Da eine bloße horizontale Seitwärtsverschiebung des Wandsegments 61 aufgrund der Form der Ausnehmung 79 nicht möglich ist, da ein Abschnitt der Ausnehmung 79 mit dem Vorsprung 27 kollidieren würde, ist das Oberteil 63 um eine Drehachse 85 drehbar gelagert und wird beim Verschieben des Wandsegments 61 nach oben um den Vorsprung 27 bis in die gezeigte Position gedreht. Dazu ist die Drehachse 85 an dem Unterteil 65 gelagert. Aufgrund der Form einer oberen Kante 87 des Oberteils 63 bleibt dieses während der Drehung um den relevanten Winkelbereich stets unterhalb seiner obersten vertikalen Erstreckung, die das Oberteil 63 auch während der Tiefziehkonfiguration einnimmt. Dies wird beispielsweise dadurch erreicht, dass die obere Kante 87 in Form eines um die Drehachse 85 konzentrischen Kreisbogens ausgebildet ist, wobei diese Form auch gleichzeitig zum Formen der Schale 3 geeignet ist. Ein Rückstellmechanismus 89, hier in Form einer spiralförmigen Feder, ist über einen Hebelabschnitt 91 des Oberteils 63 mit diesem verbunden sowie an dem Unterteil 65 gegengelagert, und kann durch eine Zug- oder Druckkraft eine Drehung des Oberteils 63 in eine entsprechende Endlage veranlassen. In dem Formwerkzeugunterteil 57 ist eine Düsenbohrung 93 ausgebildet, welche beispielsweise in der Tiefziehkonfiguration des Formwerkzeugunterteils 57 durch das Wandsegment 61 verschlossen ist und in der Entnahmekonfiguration wie gezeigt freigegeben ist, um einen Luftstrom auf und entlang des Wandsegments 61 zu ermöglichen und dieses damit zu kühlen.

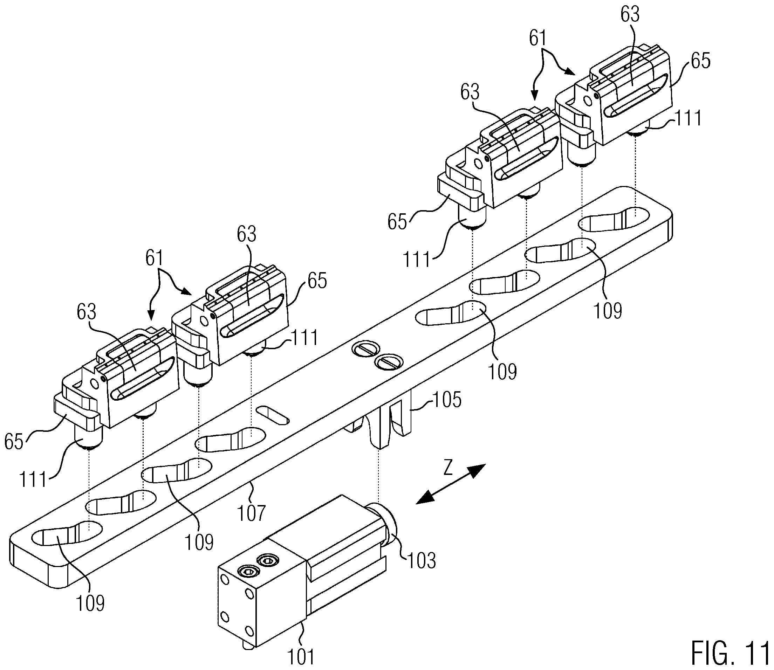

Figur 11 zeigt eine perspektivische Ansicht von vier Wandsegmenten 61 mit Antriebskomponenten in den Positionen für die Tiefziehkonfiguration. Die Darstellung ist vergleichbar einer Explosionszeichnung, wobei die relative Anordnung der Komponenten durch gestrichelte Linien angedeutet ist. Ein linearer Antrieb 101, beispielsweise ein Elektromotor oder ein Pneumatikzylinder, umfasst eine Stange, an deren Ende ein Teller 103 angeordnet ist, wobei der Antrieb 101 dazu konfiguriert ist, den Teller 103 entlang der Bewegungsrichtung Z vor- und zurück zu bewegen. Der Teller 103 ist mit einer Klammer 105 eines Schiebers 107 in Eingriff und veranlasst eine entsprechende Bewegung des Schiebers 107. Der Schieber 107 weist eine oder mehrere kurvenförmige Steuernute 109 auf, in welcher jeweils ein Zapfen 111 des Wandsegments 61 verschiebbar gelagert ist. Wie weiter unten dargestellt, ist das Wandsegment 61 so in Führungen des Formwerkzeugunterteils 57 gelagert, dass die Bewegung des Schiebers 107 entlang der Bewegungsrichtung Z eine dazu senkrechte Bewegung des Wandsegments 61 verursacht. Hier dargestellt sind Wandsegmente 61 mit jeweils zwei Zapfen 111. Es ist jedoch auch denkbar, nur einen Zapfen 111, beispielsweise mittig angeordnet, pro Wandsegment 61 vorzusehen.

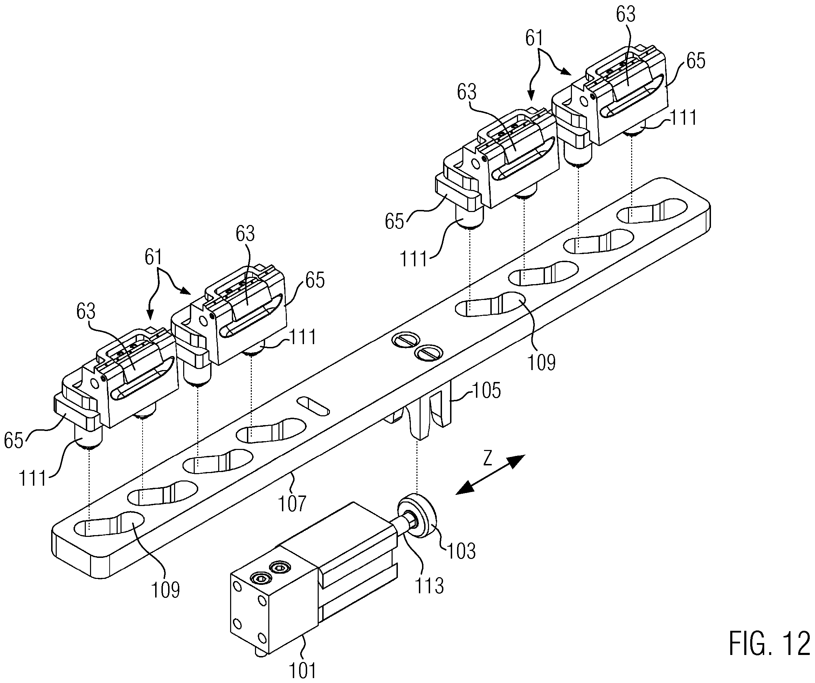

Figur 12 zeigt eine perspektivische Ansicht von vier Wandsegmenten 61 mit Antriebskomponenten in Entnahmekonfiguration. Im Vergleich zu Figur 11 ist der Teller 103, und somit der Schieber 107, mittels einer Stange 113 nach rechts bewegt. Da die Wandsegmente 61 aufgrund ihrer Führung in dem Formwerkzeugunterteil 57 in der Richtung Z keinen Bewegungsfreiheitsgrad haben, führen sie lediglich eine dazu senkrechte Bewegung, verursacht durch die Steuernute 109 aus. Gleichzeitig wird die Drehbewegung der Oberteile 63 des Wandsegments 61 veranlasst.

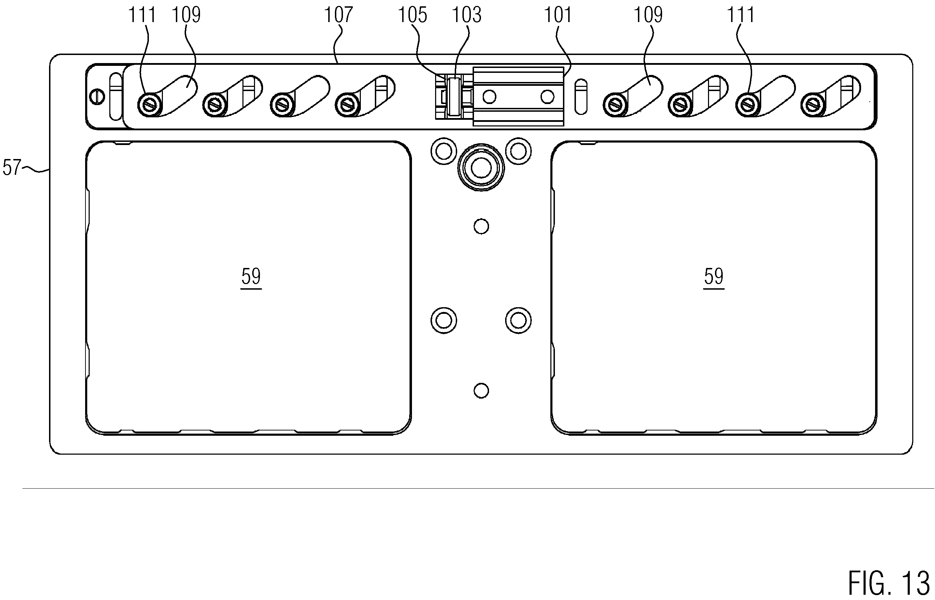

Figur 13 zeigt eine horizontale Schnittansicht eines Formwerkzeugunterteils 57 in Tiefziehkonfiguration. Der Teller 103 befindet sich in einer zurückgezogenen Position und der Schieber 107 in einer in dieser Darstellung rechten Position. Die Steuernute 109 verschieben also die Zapfen 111 und damit das Wandsegment 61 so, dass eine Schale 3 tiefgezogen werden kann.

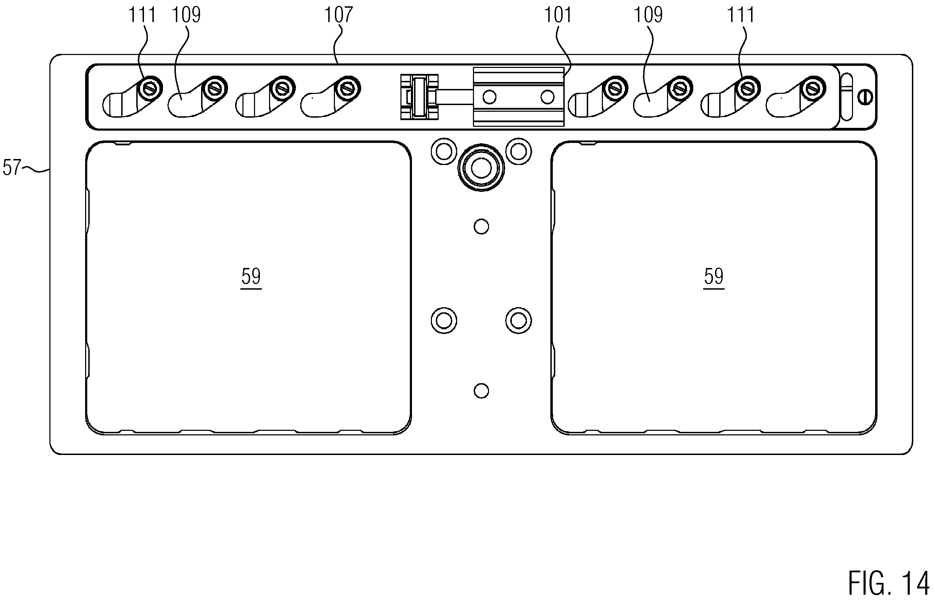

Figur 14 zeigt eine horizontale Schnittansicht eines Formwerkzeugunterteils 57 in Entnahmekonfiguration. Dabei ist der Schieber 107 nach links verschoben, so dass die Zapfen 111 und damit die Wandsegmente 61 von der Formmulde 59 wegbewegt werden, um das Absenken des Formwerkzeugunterteils 57 und damit den Weitertransport der Schalen 3 nach dem Tiefziehen zu ermöglichen.

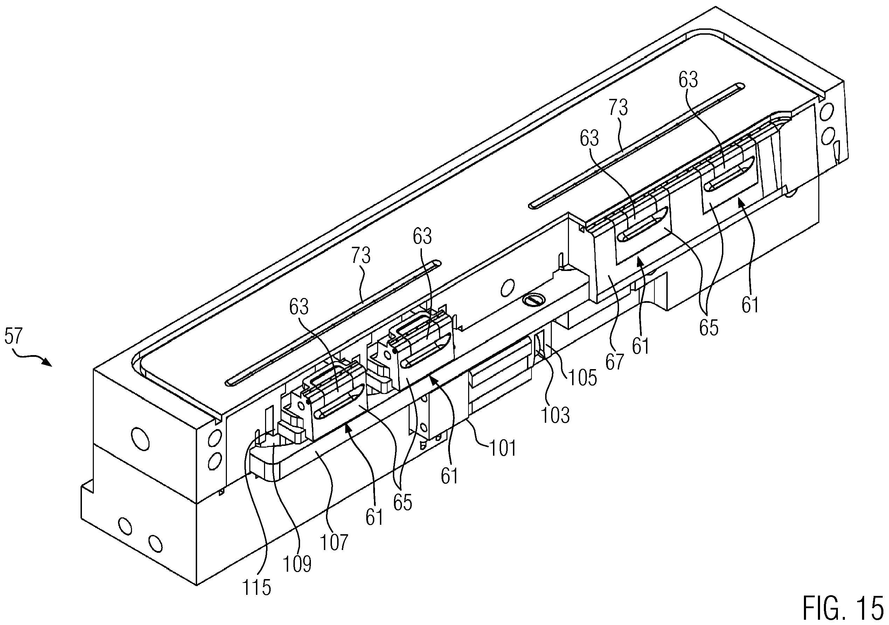

Figur 15 zeigt eine perspektivische Ansicht eines gewinkelten Schnitts des Formwerkzeugunterteils 57 in Tiefziehkonfiguration entsprechend der Figuren 11 und 13. Im rechten Teil der Darstellung ist die Seitenfläche 67 der Formmulde 59 dargestellt, um den bündigen Abschluss der Wandsegmente 61 mit eben dieser Seitenfläche 67 in der Tiefziehkonfiguration zu zeigen. Im linken Teil der Darstellung ist hingegen die Seitenfläche 67 ausgespart, um den Schieber 107 darzustellen. Zudem ist zu erkennen, wie die Wandsegmente 61 an Führungen 115 des Formwerkzeugunterteils 57 anliegen, um durch die Bewegung der Steuernute 109 zu der Formmulde 59 hin oder von dieser weg bewegt zu werden.

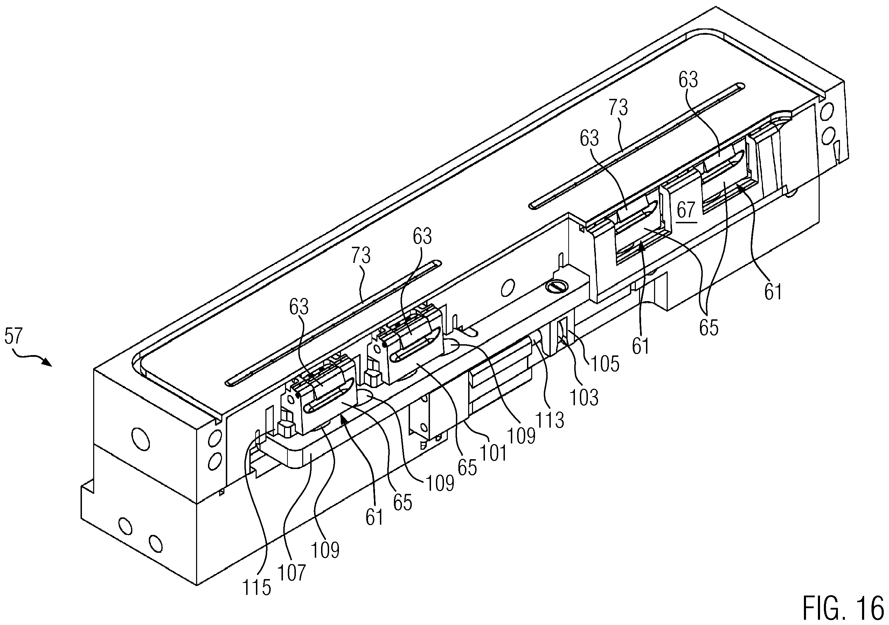

Figur 16 zeigt eine perspektivische Ansicht eines gewinkelten Schnitts des Formwerkzeugunterteils 57 in Entnahmekonfiguration entsprechend der Figuren 12 und 14. Die Wandsegmente 61 sind mittels der Steuernute 109 und der darin angeordneten Zapfen 111 aufgrund der Rechtsverschiebung des Schiebers 107 von der Formmulde 59 weg und nach außen bewegt. Gleichzeitig sind die Oberteile 63 gedreht.

Im Folgenden wird die Funktionsweise einer erfindungsgemäßen Tiefziehverpackungsmaschine 41 zum Herstellen einer Verpackung 1 erläutert.

Wie bereits in Figur 6 dargestellt, wird zunächst eine Unterfolie 49 einer Formstation 43 zugeführt, in dieser zwischen einem Formwerkzeugunterteil 57 und einem Formwerkzeugoberteil beim Schließen der Formstation 43 geklemmt und anschließend unter Ausbildung geeigneter Temperaturen und Druckdifferenzen in eine Formmulde 59 zu einer Schale 3 tiefgezogen. Dabei wird mittels einer geeigneten Ausnehmung 69, welche in einem verschiebbaren Wandsegment 61 ausgebildet ist, ein Hinterzug 23 mit Vorsprung 27 an einer Seitenfläche 21 geformt. Anschließend wird in oder nachfolgend zu der Formstation 43 eine Trennlinie 11 zwischen einem oberen Rand 7 und einem Klemmabschnitt 13, welcher in Verlängerung des oberen Rands 7 ausgebildet ist, geschnitten oder perforiert, wobei die Trennlinie 11 derart gestaltet ist, dass der Klemmabschnitt 13 zunächst in Verbindung mit dem Rand 7 bleibt, sich jedoch bei einem ersten Knicken an der Trennlinie 11 von dem Rand 7 löst. Um die tiefgezogene Schale 3 aus der Formmulde 59 nach oben entnehmen zu können, ohne dass der Hinterzug 23 mit Teilen des Formwerkzeugunterteil 57 kollidiert, wird das Wandsegment 61 nach außen und von der Formmulde 59 weg verschoben. Ein Oberteil 63 des Wandsegments 61 führt dabei zusätzlich eine Drehbewegung aus, um bei der horizontalen Verschiebebewegung des Wandsegments 61 nicht mit einem Vorsprung 27 des Hinterzugs 23 zu kollidieren.

Nach dem Absenken des Formwerkzeugunterteils 57 und einem Weitertransport wird die Schale 3 mit einem Produkt 51 befüllt und in einer Siegelstation 45 mit einer Oberfolie 53 gasdicht versiegelt. Dabei erstreckt sich die Oberfolie 53 sowohl bis über den Rand 7 der Schale 3 als auch über den Klemmabschnitt 13 und es wird auf dem Rand 7 eine erste Siegelnaht 9 und auf dem Klemmabschnitt 13 eine zweite Siegelnaht 15 und optional eine dritte Siegelnaht 17 mit der Oberfolie 53 ausgebildet. Anschließend wird in einer Schneideeinrichtung 47 die Kontur des oberen Rands 7 sowie des Klemmabschnitts 13 geschnitten, wobei vorzugsweise die Ecken einen Rundschnitt erhalten. Werden in der Tiefziehverpackungsmaschine 41 mehrere Schalen 3 neben- oder hintereinander pro Arbeitsschritt geformt und versiegelt, so werden die Verpackungen 1 mittels der Schneideeinrichtung 47 auch vereinzelt. Mittels einer Abfördereinheit 55 werden die einzelnen Verpackungen 1 abtransportiert.

Ausgehend von den oben dargestellten Ausführungsformen einer Verpackung 1, einer Tiefziehverpackungsmaschine 41 und eines Verfahrens zum Betrieb einer solchen Tiefziehverpackungsmaschine 41 sind vielerlei Variationen derselben denkbar. So kann die Formmulde 59 seitlich auch rund oder oval geformt sein um entsprechende Verpackungen 1 herzustellen, wobei auch die Wandsegmente 61 entsprechend angepasst sind. Die verschiebbaren Wandsegmente 61 können anstatt einer Ausnehmung 69 für einen Hinterzug 23 auch Noppen, Zapfen oder Ähnliches aufweisen, um in die Packung hineinragende Konturen zu formen. Anstatt einen Vorsprung 27 je Hinterzug 23 vorzusehen, ist es auch denkbar, einen breiteren Hinterzug 23 mit zwei oder mehreren Vorsprüngen 27 auszubilden.

## Patentansprüche

1. Verpackung (1), insbesondere Tiefziehfolienverpackung, mit einer Schale (3) zum Einlegen eines Produkts (51) und einem an einer Oberseite (5) der Schale (3) umlaufenden, im Wesentlichen horizontalen Rand (7), mit dem zumindest abschnittsweise ein Klemmabschnitt (13) mittels einer Trennlinie (11) lösbar verbunden ist, und wobei die Verpackung (1) des Weiteren eine Oberfolie (53) umfasst, welche sich wenigstens abschnittsweise über die Schale (3), den Rand (7) und den Klemmabschnitt (13) erstreckt und mit einer umlaufenden ersten Siegelnaht (9) mit dem Rand (7) lösbar verbunden ist und so die Schale (3) gasdicht verschließt, und die Oberfolie (53) mit einer zweiten Siegelnaht (15) mit dem Klemmabschnitt (13) verbunden ist, **dadurch gekennzeichnet, dass** an einer Seitenfläche (21) der Schale (3) ein Hinterzug (23) angeordnet ist, der einen Vorsprung (27) aufweist, wobei der Vorsprung (27) dazu geeignet ist, den Klemmabschnitt (13) zu arretieren, wenn der Klemmabschnitt (13) an der Trennlinie (11) von dem Rand (7) gelöst ist und sich zumindest abschnittsweise zwischen dem Vorsprung (27) des Hinterzugs (23) und der Seitenfläche (21) der Schale (3) befindet.

2. Verpackung nach Anspruch 1, **dadurch gekennzeichnet, dass** der Abstand (A) eines Scheitels (S) des Vorsprungs (27) zu der Trennlinie (11) geringer ist als eine Breite (B) des Klemmabschnitts (13).

3. Verpackung nach einem der vorangegangenen Ansprüche, **dadurch gekennzeichnet, dass** der Klemmabschnitt (13) eine Kontur (19) aufweist, um eine ausreichende Festigkeit des Klemmabschnitts (13) zu gewährleisten, so dass dieser arretiert bleibt, wenn eine Zugkraft von der Oberfolie (53) auf diesen ausgeübt wird.

4. Verpackung nach einem der vorangegangenen Ansprüche, **dadurch gekennzeichnet, dass** der Klemmabschnitt (13) eine dritte Siegelnaht (17) aufweist.

5. Verpackung nach einem der vorangegangenen Ansprüche, **dadurch gekennzeichnet, dass** der Hinterzug (23) im seitlichen Profil betrachtet im Wesentlichen einem Viertel eines Ovals entspricht.

6. Verpackung nach einem der vorangegangenen Ansprüche, **dadurch gekennzeichnet, dass** die zweite und/oder dritte Siegelnaht (15, 17) nicht-lösbar ausgebildet ist.

7. Verpackung nach einem der vorangegangenen Ansprüche, **dadurch gekennzeichnet, dass** die erste Siegelnaht (9) als wiederverschließbare Klebeverbindung ausgebildet ist.

8. Tiefziehverpackungsmaschine (41) zum Herstellen einer Verpackung (1), insbesondere einer Verpackung (1) gemäß einem der vorangegangenen Ansprüche, umfassend eine Formstation (43) zum Tiefziehen einer Unterfolie (49), wobei die Formstation (43) ein Formwerkzeugunterteil (57) mit einer Formmulde (59) umfasst und die Formmulde (59) ein Wandsegment (61) aufweist, welches ausgebildet ist, eine Seitenfläche (21) der Verpackung (1) mit einem Hinterzug (23) zu formen, wobei das Wandsegment (61) ein Oberteil (63) und ein Unterteil (65) umfasst und verschiebbar gelagert ist, um von einer ersten Position, bei welcher sich die Formmulde (59) in einer Tiefziehkonfiguration, die zum Tiefziehen der Unterfolie (49) geeignet ist, befindet, in eine zweite Position, bei welcher sich die Formmulde (59) in einer Entnahmekonfiguration, die zum Absenken des Formwerkzeugunterteils (57) geeignet ist, befindet, verschiebbar zu sein, **dadurch gekennzeichnet, dass** das Oberteil (63) derart an dem Unterteil (65) angelenkt ist, um mit diesem verschoben zu werden und dabei eine Drehbewegung relativ zum Unterteil (65) auszuführen.

9. Tiefziehverpackungsmaschine nach Anspruch 8, **dadurch gekennzeichnet, dass** das Oberteil (63) derart an dem Unterteil (65) angelenkt ist, dass das Oberteil (63) beim Ausführen der Drehbewegung während des Verschiebens des Wandsegments (61) stets unterhalb seiner obersten vertikalen Erstreckung in der Position, wenn die Formmulde (59) in der Tiefziehkonfiguration ist, bleibt.

10. Tiefziehverpackungsmaschine nach Anspruch 8 oder 9, **dadurch gekennzeichnet, dass** das Oberteil (63) an einer an dem Unterteil (65) angeordneten Drehachse (85) angelenkt ist.

11. Tiefziehverpackungsmaschine nach einem der Ansprüche 8 bis 10, **dadurch gekennzeichnet, dass** das Oberteil (63) in der Tiefziehkonfiguration der Formmulde (59) an dem Unterteil (65) formschlüssig anliegt.

12. Tiefziehverpackungsmaschine nach einem der Ansprüche 8 bis 11, **dadurch gekennzeichnet, dass** das Oberteil (63) mit einem Rückstellmechanismus (89), insbesondere einer Feder (89), an dem Unterteil (65) angelenkt ist, um beim Verschieben des Wandsegments (61) automatisch in eine Endlage zurückzukehren.

13. Tiefziehverpackungsmaschine nach einem der Ansprüche 8 bis 12, **dadurch gekennzeichnet, dass** das Formwerkzeugunterteil (57) Düsenbohrungen (93) aufweist, um zur Kühlung des Wandsegments (61) Luft auf dieses zu blasen, wobei die Düsenbohrungen (93) verschlossen sind, wenn sich die Formmulde (59) in der Tiefziehkonfiguration befindet und aktiv sind, wenn sich die Formmulde (59) in der Entnahmekonfiguration befindet.

14. Tiefziehverpackungsmaschine nach einem der Ansprüche 8 bis 13, **dadurch gekennzeichnet,** einen linearen Antrieb (101) aufzuweisen, welcher mit einem Schieber (107) in Eingriff ist, um diesen zu bewegen, wobei der Schieber (107) eine kurvenförmige Steuernut (109) aufweist, und das verschiebbare Wandsegment (61) einen Zapfen (111) umfasst, der mit der Steuernut (109) in Eingriff ist, so dass das Wandsegment (61) beim Betätigen des Antriebs (101) linear verschoben wird.

15. Verfahren zum Betrieb einer Tiefziehverpackungsmaschine (41) nach einem der Ansprüche 8 bis 14, wobei in einer Formmulde (59) einer Formstation (43) der Tiefziehverpackungsmaschine (41) eine Schale (3) mit einem Hinterzug (23) in eine Unterfolie (49) tiefgezogen wird, und wobei zwischen einem an einer Oberseite (5) der Schale (3) umlaufenden Rand (7) und einem Klemmabschnitt (13) eine Trennlinie (11) ausgebildet wird, und wobei die Schale (3) mit einer Oberfolie (53) verschlossen wird, wofür entlang des Rands (7) eine umlaufende gasdichte und lösbare erste Siegelnaht (9) ausgebildet wird und wobei zwischen Oberfolie (53) und Klemmabschnitt (13) eine zweite Siegelnaht (15) ausgebildet wird, **dadurch gekennzeichnet, dass** nach dem Tiefziehen ein Wandsegment (61) der Formmulde (59) umfassend ein Oberteil (63) und ein Unterteil (65) seitlich verschoben wird, um die Schale (3) freizugeben, wobei das Oberteil (63) zusätzlich relativ zum Unterteil (65) gedreht wird, um während des Verschiebens einen Vorsprung (27) des Hinterzugs (23) zu passieren.
